# EUROPEAN PATENT APPLICATION

(11) **EP 2 207 141 A1**
(43) Date of publication of application: **14.07.2010**
(21) Application number: 09010875.4
(22) Date of filing: 25.08.2009
(51) Int. Cl.: G07B 17/00, G06Q 10/00

(54) **Method and system for improving carbon footprint of mail**

(30) Priority: 15.12.2008 US 334935
(71) Applicant: Pitney Bowes, Inc., Stamford, CT 06926-0700 (US)
(72) Inventor: Sussmeier, John W., Cold Spring, New York 10516 (US); Das, Pradeep K., Bethel, Connecticut 06801 (US); Brand, Patrick M., Southport, Connecticut 06890 (US)
(74) Representative: HOFFMANN EITLE

(57) **Abstract**

A mail production system enhanced for measuring and reducing carbon footprint of mail. The system includes an inserter machine with sensors configured to detect attributes of mail that may contribute to carbon footprint. A controller computer (40) is in communication with the inserter sensors. The controller (40) further receives and stores mail job attribute data from a data file regarding attributes of the mail to be produced. The computer memory (46) includes data correlating particular mail attributes to corresponding carbon footprint. The controller computer (40) is programmed to calculate a carbon footprint for mail to be produced on the inserter by adding carbon footprint contributed by sensed attributes and mail job attribute data. The controller computer (40) stores carbon footprint data for comparison with future mail jobs. The controller computer (40) provides the user with carbon reduction suggestions corresponding to attributes of the mail.

## Description

Traditional mail processing is based on a cost-driven model that was originally designed with a focus on improving productivity and cost efficiency. Historically, the print-to-mail process was a labor-intensive, time-consuming manual construct. With the advent of sophisticated output management systems and automated document factories, print-to-mail operations were able to automate processes and centralize control. These capabilities enable mail operations to improve quality and process visibility, eliminate defects, minimize bottlenecks, manage capacity, and get output to market faster and more profitably. However, while output management and automation solutions are successful in terms of productivity and efficiency, one area of print-to-mail optimization has been largely overlooked. That area is environmental performance and environmental cost and impact.

In a traditional mail workflow, documents are designed, created, and composed in the document creator/owners' environment. Once created, paper and envelopes are sourced, printed and sometimes reprinted, often on different platforms, devices, and even locations, which complicates the process. In many cases, the next step is to transport the documents to inserting equipment, prepare them for mailing, and then transport them again to a postal facility for processing. Often the documents are transported to yet another facility for outgoing sorting. Once sorted, the mail is typically transported via ground or air to an incoming sorting facility, then to a delivery office, and ultimately delivered to the intended recipient.

In this workflow, paper production and transportation accounts for a large portion of carbon emissions. And, while mailers have little control over inter-postal logistics and paper production, there are still rich opportunities to adjust their own processes to minimize environmental impact. Transforming the mailstream to a more carbon conscious process represents a shift in focus from a cost- and efficiency-driven model to a holistic model that combines cost, quality, productivity, compliance, increased communication effectiveness and environmental performance in one highly efficient construct.

When it comes to optimizing the mailstream for environmental performance, there should be an allocation of where carbon emissions are generated throughout the mailpiece lifecycle. Various components of the production mail process create different levels of carbon emissions. By pinpointing where those emissions are created, mailers can optimize processes to reduce emissions and their related costs and business risks throughout the mailstream.

One of the two areas where the majority of carbon is emitted is in the transportation-of paper, envelopes and inserts to the mail facility; of printed output to inserters; from inserters to sortation equipment, and of course, in inter-postal transportation. While much of the postal logistics process is beyond the mailers' control, new processes and technologies can minimize reliance on carbon emitting activities. Paper production is another big component of the carbon footprint equation. There are opportunities to bring in state-of-the-art technologies, in accordance with the present invention, to reduce carbon emissions.

In a first preferred embodiment, the invention is a mail production system enhanced for measuring and reducing carbon footprint of mail produced on the system. The system includes an inserter machine that creates enveloped mail from printed materials. The inserter machine is uniquely situated in the workflow to gather the appropriate information about the mail production for purposes of emissions analysis. The inserter includes sensors configured to detect attributes of mail that may contribute to carbon footprint. A controller computer is in communication with the inserter sensors. The controller further receives and stores mail job attribute data regarding attributes of the mail to be produced, usually from a source external to the inserter. The computer memory includes data correlating particular mail attributes to corresponding carbon footprint. The controller computer is programmed to calculate a carbon footprint for mail to be produced on the inserter by adding carbon footprint contributed by sensed attributes and mail job attribute data. The controller computer stores carbon footprint data for comparison with future mail jobs. The controller computer further provides the user with carbon reduction suggestions corresponding to attributes of the mail. The suggestions are selected based on attributes of past mail jobs where carbon footprint could be improved upon.

In a further embodiment, the invention comprises a computer implemented method of calculating carbon footprint for a mailing campaign. The method includes inputting information about paper products to be used as part of the mailing campaign, and calculating carbon dioxide generated by manufacturing the paper products. Similarly information is input about the transport of material, printing of documents, assembly of documents, and an expected disposal method. Carbon footprint contribution for each of these components is calculated based on tables that store the relationship between the particular activity and carbon output. A total carbon footprint is obtained by adding together these various components. To reduce carbon footprint various of the carbon emitting parameters of the campaign can be altered and the corresponding carbon reduction can be calculated.

The accompanying drawings illustrate presently preferred embodiments of the invention, and together with the general description given above and the detailed description of the preferred embodiments given below, serve to explain the principles of the invention.

Fig. 1 shows steps for creating and processing mail, as divided up for the purpose of analyzing carbon footprint of mail.

Fig. 2 shows a user interface for inputting mail attributes for the purpose of determining carbon footprint.

Fig. 3 depicts an algorithm for calculating carbon footprint of mail based on mail preparation parameters.

Fig. 4 depicts a computer system and a mail processing machine that can embody the present invention.

Fig. 5 depicts the operational flow of a carbon footprint calculator as implemented in a controller computer of an inserter machine.

There are opportunities for mailers to reduce carbon emissions in many areas of the mail process using the methods and technologies described herein. As a first example of an opportunity to improve mail from an environmental perspective, undeliverable returned mail generates unnecessary handling, wasted paper, energy, labor and postage costs. Reducing the volume of misdirected mail is a great way to reduce carbon footprint.

As another example, print operations can take action to improve environmental performance in many ways, whether it's using recycled or Sustainable Forestry Initiative (SFI)-certified paper and environmentally friendly toners, chemicals, and inks; choosing energy-compliant devices; or printing in duplex or multi-up to decrease waste, paper consumption, and emissions.

For print-to-mail operations using older devices that weren't designed for optimal paper usage, lower emissions, energy conservation or reusable components, there is an opportunity to adopt newer technologies that reduce waste production, carbon emissions and energy consumption.

Changing traditional processes by taking advantage of new technologies also offers opportunities for improvement. For example, many black-and-white transactional mail applications still combine formatted variable data with pre-printed offset sheets that contain static and corporate/branding messaging in black-and-white or color. The printed stock/stationery is loaded into the input feed tray of a black-and-white cut-sheet printer or pre-printed on a roll that is fed into a black-and white continuous feed printer. With the advent of powerful new highlight and full-color continuous feed digital printing systems, mailers can replace costly pre-printed forms-based processes with an all white paper solution in two ways: (1) compose print applications to include the color form in the print stream, optimized for digital color printers; and (2) overlay forms electronically on top of the variable data before printing on a digital color printing system.

These options eliminate the need for pre-printed offset forms, not only saving printing and warehousing costs, but providing sustainable benefits. From an environmental perspective, these new steps minimize the need to transport the sheets and to maintain, and then dispose of, large inventories of obsolete forms. Given the enormous volume of transactional documents printed, these two options can minimize the carbon footprint significantly.

As for insertion of documents into envelopes, there are certainly opportunities to reduce emissions. For example, many mailers produce inserts at remote, off-site locations and then transport them to the print-to-mail facility, an approach that can generate unnecessary transportation requirements. Sourcing inserts closer to the point of insertion reduces carbon emissions. As will be discussed further below, inserter machines are uniquely situated in the mail creation workflow to measure the carbon footprint of mail.

Another new technology with environmental potential is the "transpromo" approach to mail creation. In this approach, highly targeted, database-driven marketing messages are delivered as text and images that are printed inline on a bill or statement or delivered via a mix of inserts and "transpromo" or "onsert" marketing. In many cases, mailers can reduce emissions output through a combination of variable inserts and/or sourcing inserts closer to the point of insertion.

The finishing phase of the traditional mail process also offers opportunities for improvement. Many print-to-mail operations use devices that were not designed to meet U.S.-based ENERGY STAR standards and use excess amounts of energy, floor space, and heating and cooling requirements. In addition to migrating to energy-efficient devices and sourcing inserts closer to the point of insertion, mailers can also integrate all aspects of the finishing process closer to the point of insertion. This process improvement reduces transportation and storage requirements, and thereby lowers carbon emissions. Finally, there is an opportunity to implement more capable devices that are both energy-efficient and Restriction of Hazardous Substances (RoHS) compliant.

From a storage perspective, many mailers continue to maintain large inventories of printed forms, books, and materials stored in physical spaces that must be heated and cooled. As mentioned earlier, many mailers are replacing pre-printed materials by producing entire documents electronically on digital color printing systems. By digitizing the entire document, they can then store the files electronically. Eliminating the need to store the materials in a warehouse reduces the volume of hard copies stored, along with floor space and warehouse space. It also reduces the resulting energy consumption and carbon emissions.

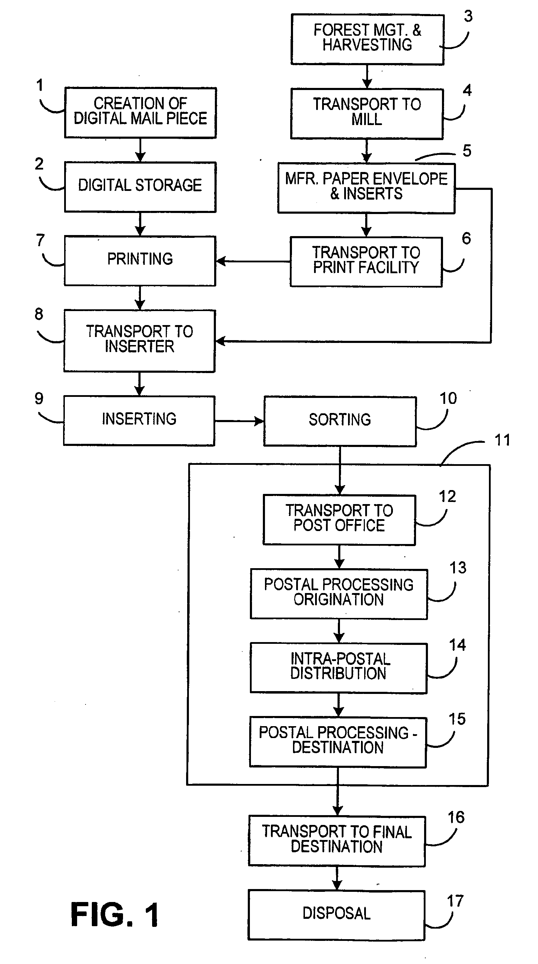

Fig. 1 shows a lifecycle flow of the creation and processing of mail, divided into a unique series of steps for purposes of carbon emission analysis. These various steps may be broken down into further sub-steps for finer analysis, but these categories have been found to be most helpful for modeling carbon footprint emissions.

The creation of the digital mail piece (step 1) represents an initial carbon production cost. Computers must be used to run software to design the mail, and to perform the business processes that generate the mail. Computers consume energy, which can be directly tied to carbon emissions using known energy to carbon footprint data. A further step is the digital storage of the electronic document (step 2). Again, maintaining data in computers uses energy that is quantifiable, and that can be converted to carbon emission numbers, using conversion data that is known in the carbon counting art.

Steps 3-6 can be used to quantify the environmental impact of the paper products for use in creating the mail. Forestry management and harvesting (3), transporting to the mill (4), manufacturing of paper and envelopes (5), and transporting of paper to a print facility (6) all contribute to the carbon footprint in a way that is quantifiable based on known studies of the environmental impact of using paper. In particular, it has been found that the following mail attributes contribute to a determination of carbon footprint: (i) paper weight, (ii) forest management techniques, (iii) recycled paper content, and (iv) pulp and paper mill manufacturing.

Printing (7) the digital document on the paper uses energy and consumes ink, and the corresponding carbon emissions can be calculated using those known relationships. In particular, significant printing attributes that contribute to carbon footprint have been found to include: (i) whether the mailing campaign includes color printing, (ii) whether the mailing campaign includes graphics, and (iii) print resolution of the mailing campaign

Printed documents are then transported to an inserting location (8), using fuel and corresponding carbon emissions that can be calculating using known emissions relating to weight being shipped. Inserting (9) occurs on a machine that accumulates and folds documents that are stuffed into envelopes and seals it. Significant carbon considerations in inserting include: (i) average number of pages for the mailing campaign, (ii) number of inserts for the mailing campaign, (iii) inserter equipment used, and (iv) scrap paper generated by the mail assembly process. Finished mail pieces can then be sorted (10) on another machine to organize the mail to conform with postal requirements for receiving discounts. By sorting the mail at this stage, downstream processing is made more efficient.

The following transportation routes have been found to be significant for calculating carbon footprint: (i) from paper manufacturing facility to a mail printing facility, (ii) from the mail print facility to an inserter facility, (iii) from the inserter facility to a sorter facility, (iv) from the sorter facility to a delivery service facility, (v) intra delivery service transport to a local delivery service facility, and (vi) transport from the local delivery service facility to a final destination.

Postal processing (11) includes transport to the post office (12), postal processing at an origination postal facility (13), intra-postal distribution (14), and postal processing at postal facility near the destination (15). Finally, the mail is transported to the final destination (16).

After the mail has been received by the recipient, the method of disposal (17) also affects the carbon footprint. Mail that is recycled can reduce carbon footprint. Incinerating or landfilling the waste also have their respective carbon footprints that can be calculated using known relationships. Another potential outcome is that the mail has been misdelivered. At that point it must be transported back to the originating mailer. Such additional transportation and processing adds significantly to the carbon footprint resulting from the mailpiece, and should be avoided.

It should be noted that emissions for the various steps 1-17 can be calculated based on publicly available data relating to the environmental impact of paper manufacturing, transportation, and energy consumption. However, it is submitted that the arrangement of steps for analysis in Fig. 1 uniquely enables an analysis of carbon footprint from creating mail, that could otherwise not be accomplished.

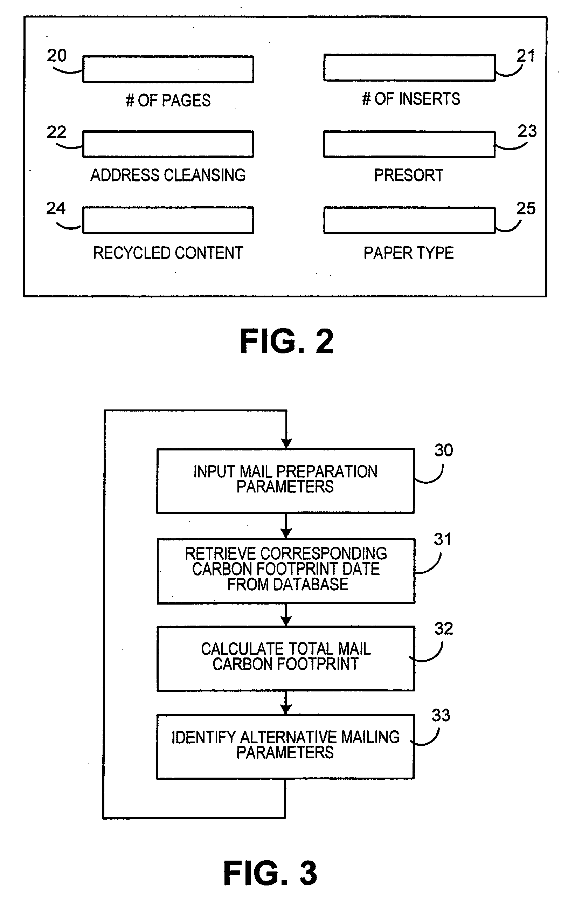

Fig. 2 depicts a sample user computer interface by which a mailer can calculate the potential carbon footprint impact of mail by inputting parameters for the various steps depicted in Fig. 1. In this example, fields 20-25 are provided for a user to input, typically by typing on a keyboard, information describing a potential mailing. Fields 20 and 21 are provided for the mailer to input a number of pages and number of inserts. The number of pages and inserts will impact the amount of paper that needs to be manufactured, processed and transported, and corresponding carbon impact can be calculated. Field 25, paper type, is also tied to paper creation and transport. Heavier paper weights require more resources to create and transport. Accordingly, lighter types of paper will help to reduce the carbon emissions that result from creating the mail. Field 24, recycled content, allows the user to input a percentage content of recycled paper being used in creating the mailpieces. Higher recycled content will reduce the carbon footprint.

Field 22, "Address Cleansing" requires a yes or no input. Field 22 indicates whether address cleansing has been performed on the mailing. Address cleansing software is used to eliminate obsolete or incorrect addresses from the mailer's mailing lists. Address cleansing will also put the addresses into a standardized form that makes it easier for the postal service to process, and to ensure that the mail gets to the correct address.

"Presort" field 23 represents another type of electronic processing that can enhance downstream efficiency. Electronic presorting rearranges the documents to be printed by zip code, so that documents that are going to the same places are already positioned near each other as the mail pieces are created. Thus, additional downstream mechanical sorting is avoided by providing batches of mail to the postal service that do not require as much processing, since the batch can be transported and processed together.

Optimally, each of the steps in Fig. 1 can have its own field on a user interface, such as shown in Fig. 2, in which information can be entered to calculate carbon footprint for mail. However, where no specific data is available, default estimates may be included for those steps.

Fig. 3 shows exemplary steps for calculating carbon footprint of mail based on information obtained through an interface as shown in Fig. 2, or from other sources. In step 30, mail preparation parameters are input. A database stores carbon emissions data for all mailing activity, preferably organized by the various steps as shown in Fig. 1. In step 31, the corresponding carbon emission data is retrieved from the database based parameter data that was input. The carbon footprint is then calculated (step 32) for the mail by adding up the carbon emissions generated from the mail lifecycle steps.

For purposes of planning carbon footprint reductions, this tool can be used to calculate the results that would occur by changing various parameters, as in step 33. By entering new parameters, and recalculating carbon footprint, a mailer can find a carbon emission optimization that best meets its needs.

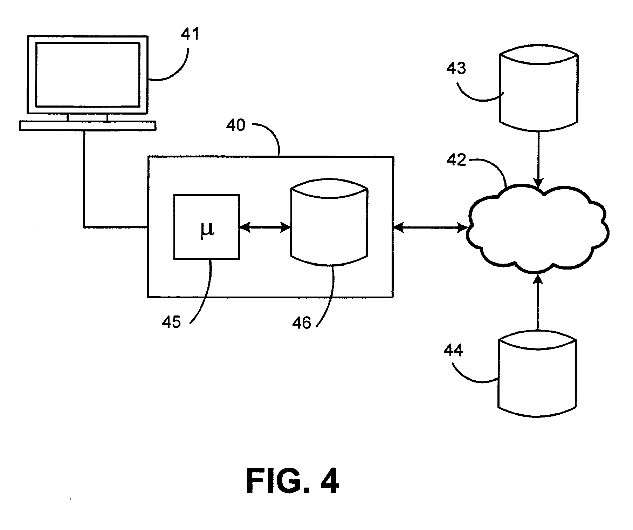

Fig. 4 depicts a computer system for implementing the invention. Computer 40 includes a microprocessor 45 for implementing the calculations described herein and a memory device 46 for storing data and applications. A display 41 is provides the results to the mailer to view. In the preferred embodiment, computer 40 is connected to a network, 42, such as the Internet, which is in connection with further data sources 43 and 44, that provide external data for use with the system. Such external data may be data on carbon emissions for various mailing activities. The external data may also be a mail job file that describes details of mail that a mailer intends to send. Mail run data files are known in the art as data files that are used to run the machines that create mail, and such files include extensive data about the nature and content of mail that is to be created. Such an external description of the mail may be used, for example, in lieu of a user input screen, such as shown in Fig. 2, for gathering data about mail jobs.

In a preferred embodiment, the computer 40 is a control computer connected to a inserter machine 47. As discussed above, the inserter machine is a device that separates printed pages into individual mail pieces, and inserts the documents into envelopes for mailing. The inserter machine 47 represents a stage in the mail creation process at which most of the mailer controllable mail creation parameters are available. Accordingly, the inserter machine 47 represents an optimal point in the process at which to include an apparatus, such as controller computer 40, that measures properties of the mail being inserted for purposes of calculating carbon footprint. The attributes of the mail may be sensed directly by sensors in the inserter 47 itself, or attributes may be located in the mail run data file that is used to control the processing of the mail in the inserter. A mail run data file may preferably be stored in a separate network storage location such as memory 44. As noted above, the mail run data file typically includes a lot of information about the mail job, and it may be further enhanced to include information about all the mail life cycle steps in Fig. 1.

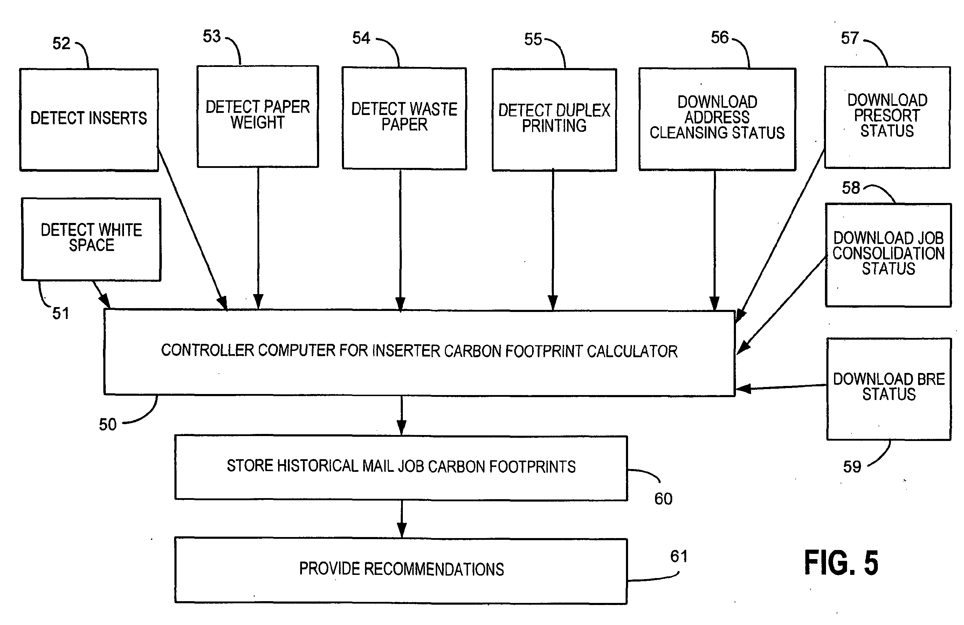

Fig. 5 depicts the operational flow of a carbon footprint calculator 50 as implemented in a controller computer of an inserter machine 47. Sensors in the inserter machine 47 detect various properties of the mail being processed and inserted. Steps 51-55 represent a series of exemplary attributes that can be sensed using known sensor technologies on an inserter machine. Steps 56-59 represent exemplary mail job attribute data that could be resident in a mail run data file, used for controlling creation of the mail. These exemplary attributes may alternately be represented by mail job attribute data instead of sensed data, and vice-versa. The carbon footprint calculator 50 calculates a mail job carbon footprint based on the data gathered from the various inputs, for example as described in connection with Fig. 3. The carbon footprints for different mail jobs are stored for historical comparison at step 60. By storing this information, the mailer can observe carbon emission trends, and the effectiveness of those steps taken to improve environmental performance. Finally, the inserter controller computer includes proactive recommendations for the mailer to improve carbon footprint at step 61. Such proactive recommendations are directly linked to the various attributes for the mail that are being processed on the inserter machine. The machine may further prioritize recommendations that give the most drastic carbon emission improvement, for the least amount of cost or effort.

At step 51, a camera can be used to detect unused white space on document pages being processed. Unused space on a page could be used to present a message to the mail recipient that might otherwise be printed on an additional advertising insert, or on an additional document page. A recommendation that can be provided at step 61 as a result of step 51 is to use the page space more efficiently, for example using transpromo messages, to avoid using extra paper for inserts or document pages.

At step 52, optical sensors in an insert feeder detect a quantity of inserts that are being placed in the mail. More insert paper means more carbon footprint, so remedial recommendations, at step 61, may include transpromo messaging.
Another remedial recommendation may be to use more precise targeting of advertising messages. By using better demographic data, a mailer can have a better idea of who might be interested in a particular message, and inserts can be placed more selectively, instead of to a broad group.

In step 53, paper weight is detected by the inserter using optical sensors and/or thickness detectors. Alternatively, paper weight may be an attribute input by the mailer, or in a mail run data file. Heavier paper means more carbon emissions, so recommendations may be made to use lighter paper that compatible with the mail production equipment. Some lighter paper may be more prone jamming in an inserter machine, so an optimal paper weight may be determined to balance paper related carbon footprint with waste caused by machine shutdowns and paper jams.

In step 54, waste paper created by inserter is measured. One common source of waste paper is a result of tractor driven input mechanisms for inserters. Such inputs require paper that has a strip of perforated paper along the edges. That strip has tractor holes for being pulled by the tractor mechanism to advance the paper. The perforated edges are removed during processing and result in a lot of paper waste. A remedial recommendation could be to switch to pinless input mechanisms that do not require the wasteful perforated edges.

In step 55, a camera is used to detect whether the inserter is processing single, or double sided paper. Double sided, or duplex, printed materials use less paper and represent a significant carbon reduction. Consequently a remedial recommendation would be to use duplex printing when single sided printing is detected.

In step 56, mail job attribute data is downloaded to identify whether address cleansing has been performed on the mail job. As discussed previously, address cleansing greatly improves the efficiency of postal processing, and the use of address cleansing can be an effective remedial recommendation.

In step 57, mail job attribute data is downloaded to identify whether the mail job has been subject to a software presort. A recommendation can be provided explaining the advantages of such presorting that enhances postal efficiency.

Similarly, for step 58 job consolidation is checked in the mail job attribute data. Job consolidation occurs when multiple mailing jobs, potentially from different mailers are combined to achieve postal efficiencies. For example, by combining jobs, sufficient quantities of mail going to particular zip codes may be achieved so that the postal services don't need to perform all of their usual sortation processes.

In step 59, mail job attribute data is examined to ascertain the business return envelope (BRE) status for the mail pieces. It is common to include a business return envelope in outgoing mail when it is expected that the recipient will need to send some kind of reply. However, some recipients may have expressed a preference not to receive BRE's because they will use some other form of response, such as telephone or electronic communication. A recommendation may be provided to eliminate BRE's to recipients who don't need them, as identified in a field of the mail job attribute data.

While the present invention has been described in connection with what is presently considered to be the most practical and preferred embodiments, it is to be understood that the invention is not limited to the disclosed embodiment, but, on the contrary, is intended to cover various modifications and equivalent arrangements included within the scope of the appended claims.

## Claims

1. A mail production system enhanced for measuring and reducing carbon footprint of mail produced on the system, the system comprising:
an inserter (9) configured to create enveloped mail from printed materials, the inserter including sensors configured to detect sensed attributes of mail to be created in the inserter;
a controller computer (40,50) in communication with the inserter sensors and configured to receive sensed attributes from the sensors; the controller computer (40,50) including a memory storage device (46) configured to receive and store mail job attribute data regarding attributes of the mail to be produced; the memory storage device (46) further including data correlating particular mail attributes to corresponding carbon footprint; the controller computer (40,50) programmed to calculate a carbon footprint for mail to be produced on the inserter by adding carbon footprint contributed by sensed attributes and mail job attribute data; the controller computer (40,50) configured to store carbon footprint data (60) on the memory storage device (46) for mail jobs for comparison with future mail jobs; and
wherein the memory storage device (46) for the controller computer includes carbon reduction suggestions (61) corresponding to attributes of mail to be created and the controller computer (40,50) is programmed to present those carbon reduction suggestions to a user based on sensed attributes and mail job attributes data.

2. The mail production system of Claim 1, wherein an attribute of mail to be produced is a number of inserts placed in mail envelopes, and a corresponding carbon reduction suggestion is to reduce the number of inserts to achieve a certain carbon footprint reduction.

3. The mail production system of Claim 1 or 2, wherein an attribute of mail to be produced is a an amount of unused white space on mail documents, and a corresponding carbon reduction suggestion is to reduce a quantity of paper consumed by more efficient use of mail document page space.

4. The mail production system of Claim 3, wherein carbon reduction suggestion to make more efficient use of document page space is to include targeted promotional messages on a transactional document, instead of inserts.

5. The mail production system of any preceding claim, wherein an attribute of mail to be produced is a weight of paper (53) being used to form documents, and a corresponding carbon reduction suggestion is use a different type of paper for a certain carbon footprint reduction.

6. The mail production system of any preceding claim, wherein an attribute of mail to be produced is whether addresses on the mail have been checked for accuracy and proper formatting by address cleansing software, and a corresponding carbon reduction suggestion is to employ address cleansing software to achieve a certain carbon footprint reduction.

7. The mail production system of any preceding claim, wherein an attribute of mail to be produced is waste paper created, and a corresponding carbon reduction suggestion is switch paper and inserter components that do not create waste paper.

8. The mail production system of any preceding claim, wherein an attribute of mail to be produced is whether mail content print data was sorted for postal discounts prior to printing, and a corresponding carbon reduction suggestion is to perform software sortation of mail content prior to printing.

9. The mail production system of any preceding claim, wherein an attribute of mail to be produced is whether different mail jobs are being consolidated to achieve , and a corresponding carbon reduction suggestion is to consolidate mail jobs to achieve a certain carbon footprint reduction.

10. The mail production system of any preceding claim, wherein an attribute of mail to be produced is whether duplex printing has been used, and a corresponding carbon reduction suggestion is to use duplex printed materials to achieve a certain carbon footprint reduction.

11. The mail production system of Claim 10, wherein the inserter (9) includes a camera sensor to detect use of duplex printed material in the inserter.

12. The mail production system of any preceding claim, wherein an attribute of mail to be produced is whether business reply envelopes are included in the mail job, and a corresponding carbon reduction suggestion is to refrain from providing business reply envelopes to recipients who do not need return envelopes.
